# EUROPEAN PATENT APPLICATION

(11) **EP 4 675 446 A1**
(43) Date of publication of application: **07.01.2026**
(21) Application number: 24921477.6
(22) Date of filing: 29.09.2024
(51) Int. Cl.: G06F 13/38

(54) **ACCELERATION DEVICE, HETEROGENEOUS COMPUTING ARCHITECTURE, AND DATA PROCESSING METHOD**

(30) Priority: 04.02.2024 CN 202410154212
(71) Applicant: Ieit Systems Co., Ltd., Jinan, Shandong 250000 (CN)
(72) Inventor: LIU, Wei, Jinan, Shandong 250000 (CN); DENG, Ziwei, Jinan, Shandong 250000 (CN); GUO, Wei, Jinan, Shandong 250000 (CN); ZHANG, Deshan, Jinan, Shandong 250000 (CN)
(74) Representative: Michalski Hüttermann & Partner Patentanwälte mbB
(86) International application number: PCT/CN2024/122153
(87) International publication number: WO 2025/161453

(57) **Abstract**

The present application relates to the field of data processing, discloses an acceleration device, a heterogeneous computing architecture, and a data processing method, and aims to solve the problem of low interaction efficiency among acceleration devices in the heterogeneous computing architecture. The acceleration device comprises: a storage module, at least one local optical port, an external routing module connected to local optical ports, an internal routing module, and a computing module. According to the present application, data transmission between a plurality of acceleration devices can be performed at the same time, the data transmission bandwidth of the optical ports is high, and the collaborative completion efficiency of computing tasks can be improved by utilizing the optical ports for data transmission.

## Description

### CROSS-REFERENCE TO RELATED APPLICATION

The present disclosure claims the priority of Chinese patent application filed on February 4, 2024 before the CNIPA, China National Intellectual Property Administration with the application number of 202410154212.9, and the title of "ACCELERATION DEVICE, HETEROGENEOUS COMPUTING ARCHITECTURE, AND DATA PROCESSING METHOD", which is incorporated herein in its entirety by reference.

### FIELD

The present disclosure relates to the field of data processing, and more particularly to an acceleration device, a heterogeneous computing architecture, and a data processing method.

### BACKGROUND

With the continuous development of artificial intelligence (Al), contradiction between computing power provided by a central processing unit (CPU) and demands for the computing power in AI field is becoming increasingly prominent. Traditional single-CPU computing architecture has the problem of insufficient computing power, and heterogeneous computing architecture emerges as the times require. The heterogeneous computing architecture refers to a combination of the CPU and one or more of a graphics processing unit (GPU), a field programmable gate array (FPGA), an application specific integrated circuit (ASIC).

In order to obtain sufficient computing power, a server is generally equipped with a plurality of acceleration cards to jointly complete computing tasks, and even extended to a plurality of servers to jointly complete inference and computing tasks of AI large models. Efficient data transmission among the plurality of cards and even plurality of services is currently a significant challenge. At present, communication between acceleration cards can be achieved by using a host memory as a bridge. That is, when data of an acceleration card A needs to be transmitted to an acceleration card B, the CPU first retrieves the data from the acceleration card A and stores it in the host memory, and then transmits the data from the host memory to the acceleration card B. This method is obviously inefficient. Another more efficient way is to use peripheral component interconnect express (PCIe) peer to peer (P2P) technology. The P2P communication is a feature of the PCIe, which allows direct data transmission between two PCIe devices without the need for the host memory as temporary storage. However, since the P2P is based on the PCIe technology, a transmission bandwidth of the P2P is also limited by the PCIe technology. Moreover, the plurality of acceleration cards share a PCIe bus in a time-sharing manner, so data transmission among the plurality of cards cannot be performed simultaneously.

Therefore, how to provide a solution to the above technical problems is a problem that needs to be solved by those skilled in the art at present.

### SUMMARY

The present disclosure provides an acceleration device, including:
a storage assembly;
at least one local optical port, where each of the at least one local optical port is connected to each remote optical port, and the remote optical port is an optical port on another acceleration device;
an external routing assembly connected to each local optical port, configured to receive a data frame to be processed transmitted by the at least one local optical port and/or an internal routing assembly, in response to the data frame to be processed satisfying an outward forwarding condition, output a data frame to be output obtained based on the data frame to be processed to a corresponding local optical port, and in response to the data frame to be processed satisfying an inward writing condition, output the data frame to be processed to the internal routing assembly;
the internal routing assembly, configured to write data to be computed in the data frame to be processed into the storage assembly and generate a first trigger instruction, in response to receiving a forwarding instruction, read result data corresponding to the forwarding instruction from the storage assembly, and transmit the data frame to be processed obtained based on the result data to the external routing assembly; and
a computing assembly, configured to compute the data to be computed in the storage assembly based on a target trigger instruction, write the result data into the storage assembly after obtaining the result data, and generate the forwarding instruction, where the target trigger instruction is the first trigger instruction or a second trigger instruction generated by a host based on a current computing task.

In an example embodiment, the at least one local optical port includes a plurality of local optical ports, the external routing assembly includes a plurality of external routing modules corresponding one-to-one to the plurality of local optical ports, and the plurality of external routing modules are connected in sequence;
where each of the plurality of external routing modules is configured to receive the data frame to be processed transmitted by a local optical port and/or an upper-level routing module connected to the external routing module itself, in response to the data frame to be processed satisfying the outward forwarding condition, output the data frame to be output obtained based on the data frame to be processed to the corresponding local optical port, in response to the data frame to be processed satisfying the inward writing condition, output the data frame to be processed to the internal routing assembly, and in response to the data frame to be processed satisfying an inward forwarding condition, output the data frame to be processed to a lower-level routing module; where in response to the upper-level routing module being the internal routing assembly, the lower-level routing module is another external routing module, and in response to the lower-level routing module being the internal routing assembly, the upper-level routing module is another external routing module.

In an example embodiment, each external routing module includes a first receiving port, a second receiving port, a first forwarding port, and a second forwarding port, where the first forwarding port and the first receiving port are connected to the local optical port corresponding to the external routing module itself, the second forwarding port is connected to the second receiving port of the lower-level routing module, and the second receiving port is connected to the second forwarding port of the upper-level routing module;
where the external routing module is configured to receive the data frame to be processed through the first receiving port and/or the second receiving port, in response to the data frame to be processed satisfying the outward forwarding condition, output the data frame to be output obtained based on the data frame to be processed through the first forwarding port, in response to the data frame to be processed satisfying the inward writing condition, output the data frame to be processed to the internal routing assembly, and in response to the data frame to be processed satisfying the inward forwarding condition, output the data frame to be processed through the second forwarding port.

In an example embodiment, the external routing module is further configured to parse the data frame to be processed to obtain routing information, determine whether the data frame to be processed satisfies the outward forwarding condition based on the routing information, and/or determine whether the data frame to be processed satisfies the inward forwarding condition based on the routing information, and/or determine whether the data frame to be processed satisfies the inward writing condition based on the routing information.

In an example embodiment, a process of determining whether the data frame to be processed satisfies the outward forwarding condition based on the routing information includes:
matching the routing information with rules in a preset routing table; and
determining that the data frame to be processed satisfies the outward forwarding condition in response to an existence of a matching effective rule;
where the preset routing table includes corresponding relationships among forwarding actions, forwarding states, and numbers of a target acceleration device, each forwarding action, each forwarding state, and each number of the target acceleration device constitute a rule, and the effective rule is a rule in which the forwarding state is an effective state.

In an example embodiment, a process of determining whether the data frame to be processed satisfies the inward forwarding condition based on the routing information includes:
matching the routing information with rules in a preset routing table; and
determining that the data frame to be processed satisfies the inward forwarding condition in response to an absence of a matching effective rule;
where the preset routing table includes corresponding relationships among forwarding actions, forwarding states, and numbers of a target acceleration device, each forwarding action, each forwarding state, and each number of the target acceleration device constitute a rule, and the effective rule is a rule in which the forwarding state is an effective state.

In an example embodiment, a process of determining whether the data frame to be processed satisfies the inward writing condition based on the routing information includes:
determining whether the routing information is local routing information;
in response to the routing information being the local routing information, determining whether the lower-level routing module connected to the external routing module itself is the internal routing assembly; and
in response to determining that the lower-level routing module connected to the external routing module itself is the internal routing assembly, determining that the data frame to be processed satisfies the inward writing condition;
a process of determining whether the data frame to be processed satisfies the inward forwarding condition based on the routing information includes:
   determining whether the routing information is the local routing information;
   in response to the routing information being the local routing information, determining whether the lower-level routing module connected to the external routing module itself is the internal routing assembly; and
   in response to that the lower-level routing module connected to the external routing module itself not being the internal routing assembly, determining that the data frame to be processed satisfies the inward forwarding condition.

In an example embodiment, the external routing module includes:
a plurality of external forwarding ports;
a first arbitration unit, configured to, in response to receiving the data frame to be processed output by the local optical port alone, output the data frame to be processed output by the local optical port to a first parsing unit, in response to receiving the data frame to be processed output by the upper-level routing module alone, outputs the data frame to be processed output by the upper-level routing module to the first parsing unit, and in response to receiving the data frame to be processed output by the local optical port and the data frame to be processed transmitted by the upper-level routing module simultaneously, arbitrate the two data frame to be processed, and output the data frame to be processed which is successfully arbitrated to the first parsing unit; the first parsing unit, configured to extract routing information and data packets from the data frame to be processed;
a first table lookup unit, configured to match the routing information as a keyword in a preset routing table, and determine forwarding information based on a matching result;
a first caching unit, configured to cache the data packets;
a first reassembly unit, configured to retrieve the data packets from the first caching unit, reassemble the forwarding information and the data packets to obtain a data frame to be forwarded; and
a second arbitration unit, configured to output the data frame to be forwarded to an external forwarding port corresponding to the forwarding information for forwarding, where in response to the external forwarding port corresponding to the forwarding information is an external forwarding port connected to the local optical port, the data frame to be forwarded is the data frame to be output.

In an example embodiment, a process of determining the forwarding information based on the matching result includes:
in response to the matching result indicating an existence of an effective rule corresponding to the routing information in the preset routing table, determining that the forwarding information is first forwarding information, where a forwarding port corresponding to the first forwarding information is a forwarding port connected to the local optical port; and
in response to the matching result indicating an absence of the effective rule corresponding to the routing information in the preset routing table, determining that the forwarding information is second forwarding information, where a forwarding port corresponding to the second forwarding information is a forwarding port connected to the lower-level routing module.

In an example embodiment, a process of writing the data to be computed in the data frame to be processed into the storage assembly and generating the first trigger instruction includes:
writing the data to be computed in the data frame to be processed into the storage assembly;
determining whether all the data to be computed required for a next round of computing tasks has been written into the storage assembly;
in response to all the data to be computed required for the next round of computing tasks having been written into the storage assembly, generating the first trigger instruction; and
in response to not writing all the data to be computed required for the next round of computing tasks into the storage assembly, repeating the operation of writing the data to be computed in the data frame to be processed into the storage assembly until all the data to be computed required for the next round of computing tasks is written into the storage assembly.

In an example embodiment, the internal routing assembly is further configured to record an actual number of received data frames to be processed;
where a process of determining whether all the data to be computed required for the next round of computing tasks has been written into the storage assembly includes:
determining whether the actual number reaches a preset number;
in response to the actual number reaching the preset number, determining all the data to be computed required for the next round of computing tasks has been written into the storage assembly; and
in response to the actual number not reaching the preset number, determining that all the data to be computed required for the next round of computing tasks has not been written into the storage assembly.

In an example embodiment, the computing assembly is further configured to generate an interrupt instruction in response to a preset number of rounds of computing tasks being completed, so that the host obtains result data of a last round of computing tasks from the storage assembly after receiving the interrupt instruction.

In an example embodiment, the internal routing assembly includes:
a frame disassembly unit, configured to, in response to receiving the forwarding instruction, obtain first frame header information in the forwarding instruction and output the first frame header information to an instruction generation unit, and in response to receiving the data frame to be processed transmitted by the external routing assembly, obtain second frame header information and the data to be computed in the data frame to be processed, and output the second frame header information to the instruction generation unit;
the instruction generation unit, configured to generate a first access instruction according to the first frame header information and a second access instruction according to the second frame header information;
an interface conversion unit, configured to, in response to receiving the first access instruction, read initial result data corresponding to the first access instruction from the storage assembly, and perform first protocol conversion on the initial result data, and in response to receiving the second access instruction, perform second protocol conversion on the data to be computed, and write the data to be computed after the second protocol conversion into the storage assembly according to the second access instruction; and
a framing unit, configured to encapsulate the result data after the first protocol conversion into the data frame to be processed and output the data frame to be processed to the external routing assembly.

In an example embodiment, the internal routing assembly further includes an internal routing module, where the internal routing module includes: a plurality of internal forwarding ports, including a first internal forwarding port connected to the frame disassembly unit and a second internal forwarding port connected to the external routing assembly;
a third arbitration unit, configured to, in response to receiving the data frame to be processed output by the external routing assembly alone, output the data frame to be processed output by the external routing assembly to a second parsing unit, in response to receiving the data frame to be processed output by the framing unit alone, output the data frame to be processed output by the framing unit to the second parsing unit, and in response to receiving the data frame to be processed output by the external routing assembly and the data frame to be processed output by the framing unit simultaneously, arbitrate the two data frame to be processed, and output the data frame to be processed which is successfully arbitrated to the second parsing unit;
the second parsing unit, configured to extract routing information and data packets from the data frame to be processed;
a second table lookup unit, configured to match the routing information as a keyword in a preset routing table, and determine forwarding information based on a matching result;
a second caching unit, configured to cache the data packets;
a second reassembly unit, configured to retrieve the data packets from the second caching unit, reassemble the forwarding information and the data packets to obtain a data frame to be forwarded;
a fourth arbitration unit, configured to send the data frame to be forwarded to a forwarding port corresponding to the forwarding information for forwarding;
where the frame disassembly unit is configured to, in response to receiving the forwarding instruction, obtain the first frame header information in the forwarding instruction and output the first frame header information to the instruction generation unit, and in response to receiving the data frame to be forwarded, obtain the second frame header information and the data to be computed in the data frame to be forwarded, and output the second frame header information to the instruction generation unit.

In an example embodiment, the first protocol conversion is that an advanced eXtensible interface memory map (AXI MM) is converted into an AXI stream protocol, and the second protocol conversion is that the AXI stream protocol is converted into the AXI MM.

In an example embodiment, the frame disassembly unit is further configured to record an actual number of received data frames to be processed transmitted by the external routing assembly, in response to the actual number reaching a preset number, generate the first trigger instruction, and output the first trigger instruction to the computing assembly.

In an example embodiment, frame header information of the data frame to be output and the data frame to be processed both includes a frame header identification field, a routing information field, an address information field, a data length field, a transaction type field, and a frame sequence number field;
the external routing assembly is further configured to determine whether the data frame to be processed satisfies the outward forwarding condition based on routing information in the data frame to be processed, and determine whether the data frame to be processed satisfies the inward writing condition based on the routing information in the data frame to be processed;
a process of writing the data to be computed in the data frame to be processed into the storage assembly includes:
   writing the data to be computed in the data frame to be processed into the storage assembly based on the frame header identification field, the address information field, the data length field, the transaction type field, and the frame sequence number field in the data frame to be processed.

In an example embodiment, the acceleration device further includes:
a direct access engine module, configured to output the second trigger instruction output by the host to the computing assembly, and write the data to be computed output by the host to the storage assembly.

The present disclosure also provides a heterogeneous computing architecture, including:
at least one acceleration device according as described in any one of the above; and
a central processing unit (CPU) arranged at a host side, configured to send the second trigger instruction generated based on the computing task to the computing assembly of the at least one acceleration device, write initial data to be computed to the storage assembly in the at least one acceleration device, and obtain the result data corresponding to the computing task from the storage assembly

The present disclosure also provides a data processing method, applied to the acceleration device as described in any one of the above, the data processing method including:
receiving, by the external routing assembly, the data frame to be processed transmitted by the at least one local optical port and/or the internal routing assembly, in response to the data frame to be processed satisfying the outward forwarding condition, outputting the data frame to be output obtained based on the data frame to be processed to the corresponding local optical port, and in response to the data frame to be processed satisfying the inward writing condition, outputting the data frame to be processed to the internal routing assembly;
writing, by the internal routing assembly, the data to be computed in the data frame to be processed into the storage assembly and generating the first trigger instruction, in response to receiving the forwarding instruction, reading the result data corresponding to the forwarding instruction from the storage assembly, and transmitting the data frame to be processed obtained based on the result data to the external routing assembly; and
computing, by the computing assembly, the data to be computed in the storage assembly based on the target trigger instruction, writing the result data into the storage assembly after obtaining the result data, and generating the forwarding instruction, where the target trigger instruction is the first trigger instruction or the second trigger instruction generated by the host based on the current computing task.

### BRIEF DESCRIPTION OF THE DRAWINGS

In order to more clearly illustrate the embodiments of the present disclosure, the accompanying drawings needed in the embodiments will be briefly introduced below. Obviously, the drawings described below are some examples of the present disclosure, and other drawings can be obtained according to these drawings without creative labor for those skilled in the art.
FIG. 1 is a schematic structural diagram of an acceleration device provided in one or more embodiments of the present disclosure.
FIG. 2 is a schematic diagram of routing among a plurality of acceleration devices provided in one or more embodiments of the present disclosure.
FIG. 3 is a schematic diagram of the data flow direction of an external routing assembly and an internal routing assembly provided in one or more embodiments of the present disclosure.
FIG. 4 is a schematic diagram of an external routing module provided in one or more embodiments of the present disclosure.
FIG. 5 is a schematic diagram of an internal routing assembly provided in one or more embodiments of the present disclosure.
FIG. 6 is a schematic diagram of an internal routing module provided in one or more embodiments of the present disclosure.
FIG. 7 is a schematic diagram of a data frame structure provided by one or more embodiments of the present disclosure.
FIG. 8 is a schematic structural diagram of another acceleration device provided by one or more embodiments of the present disclosure.
FIG. 9 is a schematic diagram of a one-dimensional data transmission architecture provided by one or more embodiments of the present disclosure.
FIG. 10 is a schematic structural diagram of a heterogeneous computing architecture provided by one or more embodiments of the present disclosure.
FIG. 11 is a schematic diagram of a two-dimensional data transmission architecture provided by one or more embodiments of the present disclosure.
FIG. 12 is a schematic diagram of a three-dimensional data transmission architecture provided by one or more embodiments of the present disclosure.
FIG. 13 is a flowchart of a data processing method provided in one or more embodiments of the present disclosure.

### DETAILED DESCRIPTION

The core of the present disclosure is to provide an acceleration device, a heterogeneous computing architecture, and a data processing method, which can simultaneously perform data transmission among a plurality of acceleration devices. A data transmission bandwidth of an optical port is relatively high, and the efficiency of collaborative completion of computing tasks can be improved by using the optical port for data transmission.

In order to make the purpose, technical solution, and advantages of the embodiments of the present disclosure more clear, the technical solution in the embodiments of the present disclosure will be described clearly and completely in conjunction with the accompanying drawings. Obviously, the described embodiments are a part of the embodiments of the present disclosure, but not all of them. Based on the embodiments in the present disclosure, all other embodiments obtained by ordinary skilled persons in the art without creative work belong to the protection scope of the present disclosure.

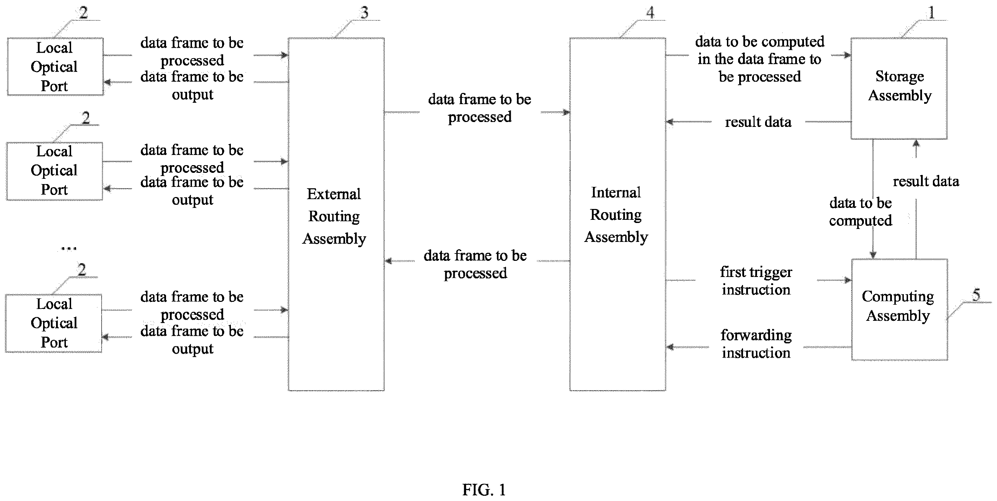

In a first aspect, please refer to FIG. 1, which is a schematic structural diagram of an acceleration device provided in the present disclosure. The acceleration device includes:
a storage assembly 1;
at least one local optical port 2, where each local optical port 2 is connected to each remote optical port, and the remote optical port is an optical port on another acceleration device;
an external routing assembly 3 connected to each local optical port 2, configured to receive a data frame to be processed transmitted by the at least one local optical port 2 and/or an internal routing assembly 4, in response to the data frame to be processed satisfying an outward forwarding condition, output a data frame to be output obtained based on the data frame to be processed to a corresponding local optical port 2, and in response to the data frame to be processed satisfying an inward writing condition, output the data frame to be processed to the internal routing assembly 4;
the internal routing assembly 4, configured to write data to be computed in the data frame to be processed into the storage assembly 1 and generate a first trigger instruction, in response to receiving a forwarding instruction, read result data corresponding to the forwarding instruction from the storage assembly 1, and transmit the data frame to be processed obtained based on the result data to the external routing assembly 3; and
a computing assembly 5, configured to compute the data to be computed in the storage assembly 1 based on a target trigger instruction, write the result data into the storage assembly 1 after obtaining the result data, and generate the forwarding instruction, where the target trigger instruction is the first trigger instruction or a second trigger instruction generated by a host based on a current computing task.

In this embodiment, the acceleration device includes the storage assembly 1, which is used to store the data to be computed required for the computing task and the result data after the computing is completed. In an embodiment, a part of areas can be divided from the storage assembly 1, denoted as an area A, for storing the data to be computed, and another part of areas can be divided, denoted as an area B, for storing the result data. The storage assembly 1 can specifically be a high bandwidth storage.

The at least one local optical port 2 is provided on the acceleration device. Each acceleration device communicates with optical ports of other acceleration devices through the local optical port 2. For ease of distinction, in this embodiment, the optical ports provided on other acceleration devices are recorded as remote optical ports. A data transmission bandwidth of a single optical port can reach 100Gb/s or more, thereby improving data transmission efficiency. Further, when a plurality of local optical ports 2 are provided on the acceleration device, enable states of respective local optical ports 2 can be set according to a current system architecture of the acceleration device. It is assumed that the current system architecture is a one-dimensional architecture, one local optical port 2 can be set to be enabled. If the current system architecture is a two-dimensional architecture, two local optical ports 2 can be set to be enabled. If the current system architecture is a three-dimensional architecture, three local optical ports 2 can be set to be enabled, and so on.

The acceleration device includes the internal routing assembly 4 and the external routing assembly 3. The external routing assembly 3 is connected to each local optical port 2 and processes the data frame to be processed transmitted through the local optical port 2. For example, the external routing assembly 3 forwards the data frame to be processed which is output by another acceleration device and satisfies the inward writing condition received via the local optical port 2 to the internal routing assembly 4, so that the internal routing assembly 4 can write the data to be computed in the data frame to be processed into the storage assembly. The external routing assembly 3 can also forward the data frame to be processed which is output by another acceleration device and satisfies the outward forwarding condition received via a certain local optical port 2 to another local optical port 2, so as to transmit the data frame to be processed to another acceleration device via the another local optical port 2. The external routing assembly 3 can also forward the data frame to be processed that satisfies the outward forwarding condition output by internal routing assembly 4 through a corresponding local optical port 2 connected to the external routing assembly 3 itself.

After receiving the data frame to be processed output by the external routing assembly 3, the internal routing assembly 4 extracts the data to be computed from the data frame to be processed, writes the data to be computed to a corresponding position in the storage assembly 1, and generates the first trigger instruction to trigger the computing assembly 5 to compute the data to be computed in the storage assembly 1. After obtaining the result data, the computing assembly 5 writes the result data to the storage assembly 1 and generates the forwarding instruction to trigger the internal routing assembly 4 to obtain the corresponding result data from the storage assembly 1, encapsulate the result data into the data frame to be processed, and output the data frame to be processed to the external routing assembly 3 for forwarding.

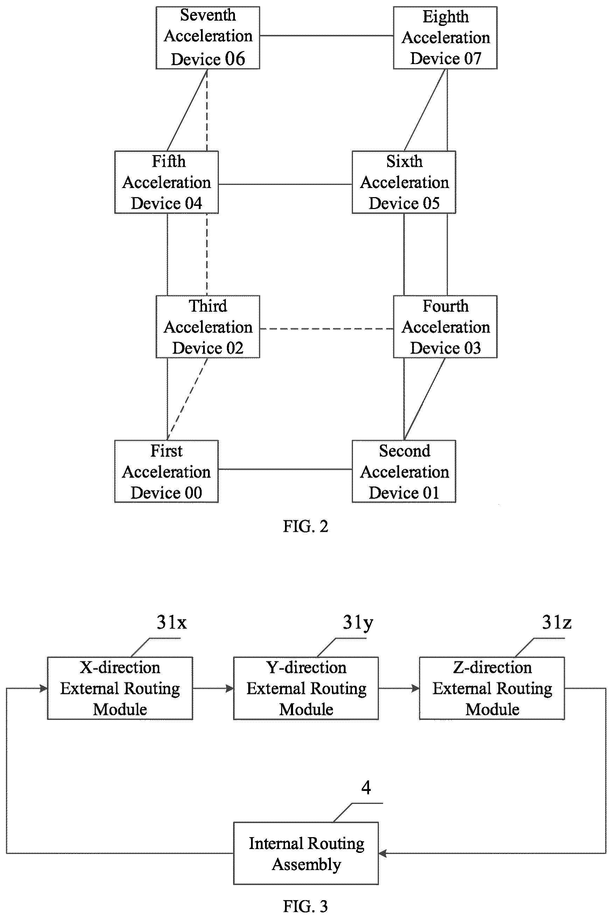

In this embodiment, each acceleration device needs to achieve traffic balance as much as possible when performing routing selection. That is, all paths have similar traffic, so all data frames are transmitted in a same direction. In this embodiment, data routing is selected according to a right-hand rule. As shown in FIG. 2, in a system with one host with eight cards, that is, including eight acceleration devices, a routing table of a first acceleration device 00 is shown in Table 1. When data of the first acceleration device 00 needs to be sent to a second acceleration device 01, a third acceleration device 02, or a fifth acceleration device 04, it is only necessary to transmit the data through a direct connection path of the external routing assembly 3 in the corresponding direction. When data transmission needs to be performed across one or more acceleration devices, for example, if the data is to be transmitted to a fourth acceleration device 03, a sixth acceleration device 05, or a seventh acceleration device 06, the data transmission path should be selected according to the right-hand rule in physics. When data transmission needs to be performed cross a plurality of acceleration device nodes, a source acceleration device is placed at an origin of a coordinate axis, and the target acceleration device that needs to cross the plurality of acceleration devices is in a diagonal direction of the source acceleration device. The data frame is first transmitted to an acceleration device directly below the target acceleration device, and then transmitted to the target acceleration device. For the first acceleration device 00, acceleration device on its diagonal is an eighth acceleration device 07. The first acceleration device 00 is placed at the origin of the coordinate axis, and the acceleration device directly below the eighth acceleration device 07 is the fourth acceleration device 03. Therefore, the data transmission path from the first acceleration device 00 to the eighth acceleration device 07 is 0→1→3→7.

**Table 1 Routing table of the first acceleration device 00 in one host with eight cards**

| target acceleration device | data path | target acceleration device | data path |
|---|---|---|---|
| 00 | - | 04 | Z |
| 01 | X | 05 | 00→04→05 |
| 02 | Y | 06 | 00→02→06 |
| 03 | 00→01→03 | 07 | 00→01→03→07 |

In this embodiment, the acceleration device is connected to the host through a peripheral component interconnect express (PCIe) bus. After an application in the host starts a computing task, a central processing unit (CPU) in the host transmits a computing instruction to the computing assembly 5 in the acceleration device, and stores original data to be computed required for the computing task in the storage assembly 1 of the acceleration device. The storage assembly 1 in the acceleration device can specifically include a high bandwidth storage. After receiving the computing instruction, the computing assembly 5 retrieves the original data from the high bandwidth storage to start computing. After processing specified steps, the computing assembly 5 stores the processed result data in the high bandwidth storage and notifies the internal routing assembly 4 to retrieve the data from the high bandwidth storage, add a frame header such as routing information to form the data frame to be processed. The internal routing assembly 4 transmits the data frame to be processed to the external routing assembly 3. The external routing assembly 3 transmits the data frame to be processed from the corresponding local optical port to a designated acceleration device, i.e., the target acceleration device, according to the routing information in the frame header of the data frame to be processed. Similarly, when data is transmitted from another acceleration device, the external routing assembly 3 transfers the data frame to be processed to the internal routing assembly 4. After processing the data frame to be processed, the internal routing assembly 4 stores the data to be computed in the data frame to be processed in the high bandwidth storage. The computing assembly 5 retrieves the data to be computed from the high bandwidth storage again for subsequent computing. After completing the whole computing task, the computing assembly 5 stores the final computing result in the high bandwidth storage and notifies the host of the completion of the task through an interrupt. The host retrieves the final computing result from the high bandwidth storage to complete the computing task. In this embodiment, only one acceleration device is used as an example for explanation, and the data processing process of all other acceleration devices is the same.

It can be seen that in this embodiment, each acceleration device is provided with one or more optical ports, through which data transmission with other acceleration devices is performed. The data transmission bandwidth of the optical ports is relatively high. In the acceleration device, routing logic is implemented through the internal routing assembly 4 and the external routing assembly 3 to achieve writing processing and forwarding processing of corresponding data frames, so that data transmission among the plurality of acceleration devices may be performed simultaneously, and the efficiency of collaborative completion of computing tasks may be improved.

On the basis of the above embodiment:
In an exemplary embodiment, the at least one local optical port 2 includes a plurality of local optical ports 2, the external routing assembly 3 includes a plurality of external routing modules 31 corresponding one-to-one to the plurality of local optical ports 2, and the plurality of external routing modules 31 are connected in sequence.

Each external routing module 31 is configured to receive the data frame to be processed transmitted by a local optical port 2 and/or an upper-level routing module connected to the external routing module itself, in response to the data frame to be processed satisfying the outward forwarding condition, output the data frame to be output obtained based on the data frame to be processed to the corresponding local optical port 2, in response to the data frame to be processed satisfying the inward writing condition, output the data frame to be processed to the internal routing assembly 4, and in response to the data frame to be processed satisfying an inward forwarding condition, output the data frame to be processed to a lower-level routing module; where in response to the upper-level routing module being the internal routing assembly 4, the lower-level routing module is another external routing module 31, and in response to the lower-level routing module being the internal routing assembly 4, the upper-level routing module is another external routing module 31.

In this embodiment, the external routing assembly 3 includes the plurality of external routing modules 31, which are connected one-to-one to the plurality of local optical ports 2 of the acceleration device. Referring to FIG. 3, taking the three-dimensional computing framework as an example, the external routing assembly 3 includes an X-direction external routing module 31x, a Y-direction external routing module 31y, and a Z-direction external routing module 31z. The X-direction external routing module 31x, the Y-direction external routing module 31y, and the Z-direction external routing module 31z are connected in sequence. The other end of the X-direction external routing module 31x is connected to the internal routing assembly 4, and the other end of the Z-direction external routing module 31z is connected to the internal routing assembly 4.

Each external routing module 31 is used to transmit data frames from the corresponding local optical port 2 to another acceleration device or to the lower-level routing module for processing according to the routing information in the frame header. Referring to FIG. 3, for the X-direction external routing module 31x, its upper-level routing module is the internal routing assembly 4, and its lower-level routing module is the Y-direction external routing module 31y. For the Y-direction external routing module 31y, its upper-level routing module is the X-direction external routing module 31x, and its lower-level routing module is the Z-direction external routing module 31z. For the Z-direction external routing module 31z, its upper-level routing module is the Y-direction external routing module 31y, and its lower-level routing module is the internal routing assembly 4. It can be understood that the data is unidirectionally transmitted in in the internal routing assembly 4, the X-direction external routing module 31x, Y-direction external routing module 31y, and Z-direction external routing module 31z.

Taking the X-direction external routing module 31x as an example, when the X-direction external routing module 31x receives a data frame to be processed through the local optical port 2 connected to the X-direction external routing module 31x, the X-direction external routing module 31x determines whether the data frame to be processed satisfies the outward forwarding condition. If the data frame to be processed satisfies the outward forwarding condition, the X-direction external routing module 31x transmits the data frame to be processed to the local optical port 2 connected to the X-direction external routing module 31x itself. If the data frame to be processed does not satisfy the outward forwarding condition, it is determined whether the data frame to be processed satisfies the inward writing condition. If the data frame to be processed satisfies the inward writing condition and the lower-level routing module of the X-direction external routing module 31x is not the internal routing assembly 4, it is determined that the data frame to be processed satisfies the inward forwarding condition. In this case, the X-direction external routing module 31x transmits the data frame to be processed to the Y-direction external routing module 31y. Correspondingly, if the Z-direction external routing module 31z receives a data frame that satisfies the inward writing condition, the Z-direction external routing module 31z forwards the data frame to internal routing assembly 4 because the lower-level routing module of the Z-direction external routing module 31z is the internal routing assembly 4.

In an exemplary embodiment, each external routing module 31 includes a first receiving port, a second receiving port, a first forwarding port, and a second forwarding port. The first forwarding port and the first receiving port are connected to the local optical port 2 corresponding to the external routing module 31 itself. The second forwarding port is connected to the second receiving port of the lower-level routing module. The second receiving port is connected to the second forwarding port of the upper-level routing module.

The external routing module 31 is specifically used to receive the data frame to be processed through the first receiving port and/or the second receiving port, in response to the data frame to be processed satisfying the outward forwarding condition, output the data frame to be output obtained based on the data frame to be processed through the first forwarding port, in response to the data frame to be processed satisfying the inward writing condition, output the data frame to be processed to the internal routing assembly 4, and in response to the data frame to be processed satisfying the inward forwarding condition, output the data frame to be processed through the second forwarding port.

In this embodiment, each external routing module 31 includes the plurality of forwarding ports, which include the first forwarding port connected to the local optical port 2 and the second forwarding port connected to the lower-level routing module. Based on the condition satisfied by the data frame to be processed, the data frame to be processed is output through the corresponding forwarding port, thereby achieving outward forwarding or inward forwarding.

In an exemplary embodiment, the external routing module 31 is also used to parse the data frame to be processed to obtain routing information, determine whether the data frame to be processed satisfies the outward forwarding condition based on the routing information, and/or determine whether the data frame to be processed satisfies the inward forwarding condition based on the routing information, and/or determine whether the data frame to be processed satisfies the inward writing condition based on the routing information.

In an exemplary embodiment, the process of determining whether the data frame to be processed satisfies the outward forwarding condition based on the routing information includes:
matching the routing information with rules in a preset routing table; and
determining that the data frame to be processed satisfies the outward forwarding condition in response to an existence of a matching effective rule;
where the preset routing table includes corresponding relationships among forwarding actions, forwarding states, and numbers of a target acceleration device, each forwarding action, each forwarding state, and each number of the target acceleration device constitute a rule, and the effective rule is a rule in which the forwarding state is an effective state.

In an exemplary embodiment, the process of determining whether the data frame to be processed satisfies the inward forwarding condition based on the routing information includes:
matching the routing information with rules in a preset routing table; and
determining that the data frame to be processed satisfies the inward forwarding condition in response to an absence of a matching effective rule;
where the preset routing table includes corresponding relationships among forwarding actions, forwarding states, and numbers of a target acceleration device, each forwarding action, each forwarding state, and each number of the target acceleration device constitute a rule, and the effective rule is a rule in which the forwarding state is an effective state.

In an exemplary embodiment, the process of determining whether the data frame to be processed satisfies the inward writing condition based on the routing information includes:
determining whether the routing information is local routing information;
if yes, determining whether the lower-level routing module connected to the external routing module itself is the internal routing assembly 4;
if yes, determining that the data frame to be processed satisfies the inward writing condition;
the process of determining whether the data frame to be processed satisfies the inward forwarding condition based on the routing information includes:
   determining whether the routing information is local routing information;
   if yes, determining whether the lower-level routing module connected to the external routing module itself is the internal routing assembly 4;
   if the lower-level routing module connected to the external routing module itself is not the internal routing assembly 4, determining that the data frame to be processed satisfies the inward forwarding condition.

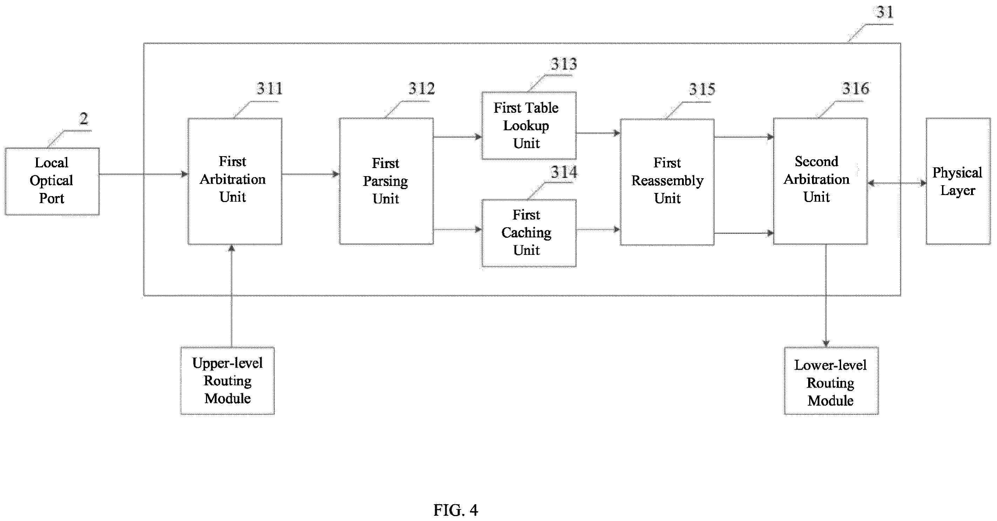

In an exemplary embodiment, referring to FIG. 4, the external routing module 31 includes:
a plurality of external forwarding ports;
a first arbitration unit 311, configured to, in response to receiving the data frame to be processed output by the local optical port 2 alone, output the data frame to be processed output by the local optical port 2 to a first parsing unit 312, in response to receiving the data frame to be processed output by the upper-level routing module alone, outputs the data frame to be processed output by the upper-level routing module to the first parsing unit 312, and in response to receiving the data frame to be processed output by the local optical port 2 and the data frame to be processed transmitted by the upper-level routing module simultaneously, arbitrate the two data frame to be processed, and output the data frame to be processed which is successfully arbitrated to the first parsing unit 312; the first parsing unit 312, configured to extract routing information and data packets from the data frame to be processed;
a first table lookup unit 313, configured to match the routing information as a keyword in a preset routing table, and determine forwarding information based on a matching result;
a first caching unit 314, configured to cache the data packets;
a first reassembly unit 315, configured to retrieve the data packets from the first caching unit 314, reassemble the forwarding information and the data packets to obtain a data frame to be forwarded; and
a second arbitration unit 316, configured to output the data frame to be forwarded to an external forwarding port corresponding to the forwarding information for forwarding, where in response to the external forwarding port corresponding to the forwarding information is an external forwarding port connected to the local optical port 2, the data frame to be forwarded is the data frame to be output.

In an exemplary embodiment, the process of determining whether the data frame to be processed satisfies the inward writing condition based on the routing information includes:
determining whether the routing information is local routing information;
if yes, determining whether the lower-level routing module connected to the external routing module itself is the internal routing assembly 4;
if yes, determining that the data frame to be processed satisfies the inward writing condition;
the process of determining whether the data frame to be processed satisfies the inward forwarding condition based on the routing information includes:
   determining whether the routing information is local routing information;
   if yes, determining whether the lower-level routing module connected to the external routing module itself is the internal routing assembly 4;
   if the lower-level routing module connected to the external routing module itself is not the internal routing assembly 4, determining that the data frame to be processed satisfies the inward forwarding condition.

In an exemplary embodiment, the process of process of determining the forwarding information based on the matching result includes:
in response to the matching result indicating an existence of an effective rule corresponding to the routing information in the preset routing table, determining that the forwarding information is first forwarding information, where a forwarding port corresponding to the first forwarding information is a forwarding port connected to the local optical port 2; and
in response to the matching result indicating an absence of the effective rule corresponding to the routing information in the preset routing table, determining that the forwarding information is second forwarding information, where a forwarding port corresponding to the second forwarding information is a forwarding port connected to the lower-level routing module.

The first arbitration unit 311 is connected to the first receiving port and the second receiving port to obtain the data frame to be processed transmitted via the local optical port 2 and the data frame to be processed output by the upper-level routing module. When receiving the data frame to be processed transmitted via the local optical port 2 or the data frame to be processed output by the upper-level routing module alone, the first arbitration unit 311 directly outputs the received data frame to the first parsing unit 312. When receiving the data frame to be processed output by the local optical port 2 and the data frame to be processed output by the upper-level routing module at the same time, the first arbitration unit 311 arbitrates the two received data frames to be processed, and outputs the data frame which is successfully arbitrated to the first parsing unit 312. The first parsing unit 312 extracts the routing information from the frame header of the data frame to be processed, and takes the routing information as the keyword for subsequent table lookup. The first table lookup unit 313 is a key unit of the external routing module 31. The first table lookup unit 313 queries the matching rule from the preset routing table according to the keyword obtained by the first parsing unit 312, thereby obtaining the corresponding action, that is, the forwarding port. The preset routing table is shown in Table 2, and the entry is composed of a matching item, an action and a state. The matching item refers to an object matched by the keyword, which is the number of the target acceleration device to which the data frame to be processed goes. The action is the port for forwarding the data frame to be processed. The local routing information mentioned above specifically refers to the number of the acceleration device.

In this embodiment, there are two forwarding ports. The first forwarding port is used to forward to a physical layer for sending to other acceleration devices (action 0x0), and the second forwarding port is used to forward to the next routing module for processing. The rules stored in the preset routing table are situations of sending to other acceleration devices through the physical layer. The state represents whether the corresponding rules in the preset routing table are effective. When the data frame reaches the external routing module 31, the first parsing unit 312 extracts the routing information from the frame header, that is, the number of the target acceleration device. The first table lookup unit 313 matches the extracted number of the target acceleration device with all the rules in the preset routing table. If there is an effective matching rule, that is, the data frame needs to be sent to another acceleration device through the physical layer. The first reassembly unit 315 retrieves the data frame from the first caching unit 314, and the second arbitration unit 316 sends the data frame to the physical layer. If there is no matching rule, the second arbitration unit 316 sends the data frame to be processed to the lower-level routing module for processing by default.

**Table 2 Preset routing table**

| matching item | action | state |
|---|---|---|
| 0×01 | 0×0 | 0×1 |
| 0×03 | 0×0 | 0×1 |
| 0×07 | 0×0 | 0×1 |
| 0×00 | 0×0 | 0×0 |

In an exemplary embodiment, the process of writing the data to be computed in the data frame to be processed into the storage assembly 1 and generating the first trigger instruction includes:
writing the data to be computed in the data frame to be processed into the storage assembly 1;
determining whether all the data to be computed required for a next round of computing tasks has been written into the storage assembly 1;
if yes, generating the first trigger instruction; and
if not, repeating the operation of writing the data to be computed in the data frame to be processed into the storage assembly 1 until all the data to be computed required for the next round of computing is written into the storage assembly 1.

In this embodiment, considering that a certain computing task may require data collaboration of a plurality of acceleration devices, the internal routing assembly 4 also determines whether the data required for each round of acceleration tasks has been received. If all the data to be computed required for the next round of computing tasks is obtained, the first trigger instruction is generated to trigger the computing assembly 5 to execute the next round of computing tasks. It can be understood that the data to be computed for the next round of computing tasks includes result data of this round of computing tasks.

In an exemplary embodiment, the internal routing assembly 4 is also used to record an actual number of received data frames to be processed;
where the process of determining whether all the data to be computed required for the next round of computing tasks has been written into the storage assembly 1 includes:
determining whether the actual number reaches a preset number;
if yes, determining all the data to be computed required for the next round of computing tasks has been written into the storage assembly 1; and
if not, determining that all the data to be computed required for the next round of computing tasks has not been written into the storage assembly 1.

In this embodiment, the internal routing assembly 4 determines the actual number of received data frames to be processed. When the actual number reaches the preset number corresponding to the next round of computing tasks, it is determined that all the data to be computed required for the next round of computing tasks are written to the storage assembly 1. Otherwise, continue to wait until all the data to be computed required for the next round of computing tasks are written to the storage assembly 1.

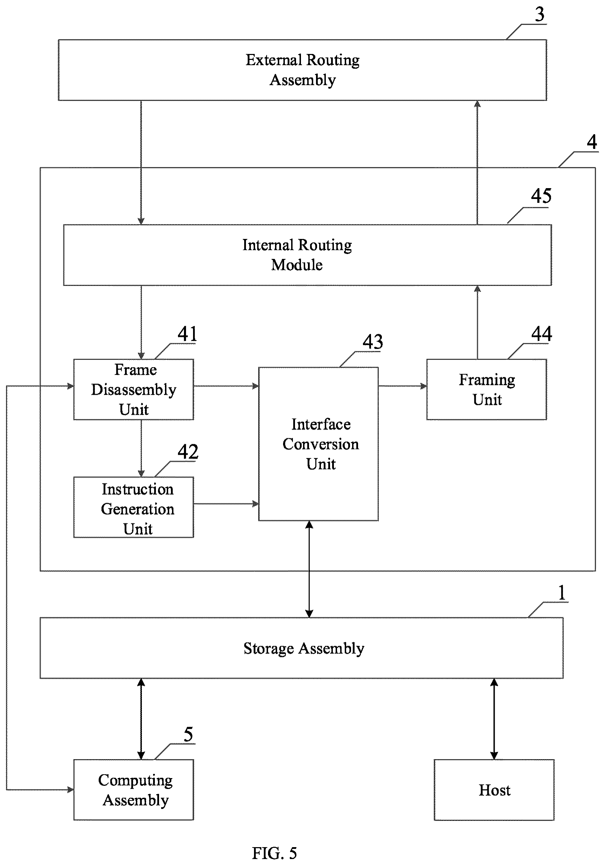

In an exemplary embodiment, referring to FIG. 5, the internal routing assembly 4 includes:
a frame disassembly unit 41, configured to, in response to receiving the forwarding instruction, obtain first frame header information in the forwarding instruction and output the first frame header information to an instruction generation unit 42, and in response to receiving the data frame to be processed transmitted by the external routing assembly 3, obtain second frame header information and the data to be computed in the data frame to be processed, and output the second frame header information to the instruction generation unit 42;
the instruction generation unit 42, configured to generate a first access instruction according to the first frame header information and a second access instruction according to the second frame header information;
an interface conversion unit 43, configured to, in response to receiving the first access instruction, read initial result data corresponding to the first access instruction from the storage assembly 1, and perform first protocol conversion on the initial result data, and in response to receiving the second access instruction, perform second protocol conversion on the data to be computed, and write the data to be computed after the second protocol conversion into the storage assembly 1 according to the second access instruction; and
a framing unit 44, configured to encapsulate the result data after the first protocol conversion into the data frame to be processed and output the data frame to be processed to the external routing assembly 3.

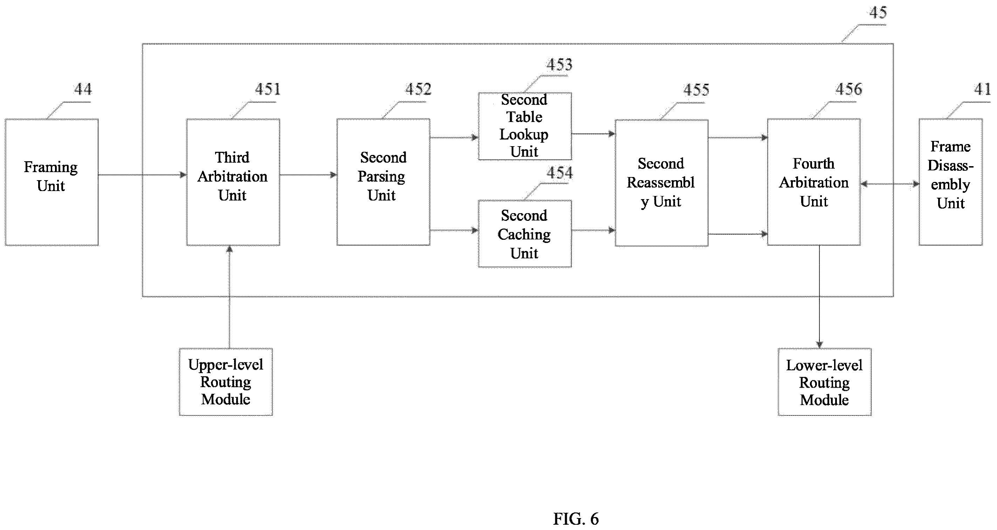

In an exemplary embodiment, the internal routing assembly 4 further includes an internal routing module 45. As shown in FIG. 6, the internal routing module 45 includes: a plurality of internal forwarding ports, including a first internal forwarding port connected to the frame disassembly unit 41 and a second internal forwarding port connected to the external routing assembly 3;
a third arbitration unit 451, configured to, in response to receiving the data frame to be processed output by the external routing assembly 3 alone, output the data frame to be processed output by the external routing assembly 3 to a second parsing unit 452, in response to receiving the data frame to be processed output by the framing unit 44 alone, output the data frame to be processed output by the framing unit 44 to the second parsing unit 452, and in response to receiving the data frame to be processed output by the external routing assembly 3 and the data frame to be processed output by the framing unit 44 simultaneously, arbitrate the two data frame to be processed, and output the data frame to be processed which is successfully arbitrated to the second parsing unit 452;
the second parsing unit 452, configured to extract routing information and data packets from the data frame to be processed;
a second table lookup unit 453, configured to match the routing information as a keyword in a preset routing table, and determine forwarding information based on a matching result;
a second caching unit 454, configured to cache the data packets;
a second reassembly unit 455, configured to retrieve the data packets from the second caching unit 454, reassemble the forwarding information and the data packets to obtain a data frame to be forwarded;
a fourth arbitration unit 456, configured to send the data frame to be forwarded to a forwarding port corresponding to the forwarding information for forwarding;
where the frame disassembly unit 41 is specifically configured to, in response to receiving the forwarding instruction, obtain the first frame header information in the forwarding instruction and output the first frame header information to the instruction generation unit 42, and in response to receiving the data frame to be forwarded, obtain the second frame header information and the data to be computed in the data frame to be forwarded, and output the second frame header information to the instruction generation unit 42.

In an exemplary embodiment, the frame disassembly unit 41 is also used to record an actual number of received data frames to be processed transmitted by the external routing assembly 3, in response to the actual number reaching a preset number, generate the first trigger instruction, and output the first trigger instruction to the computing assembly 5.

In this embodiment, the internal routing assembly 4, the computing assembly 5, and the host are all connected to corresponding communication interfaces on the high bandwidth storage to achieve data interaction with the high bandwidth storage. Specifically, the high bandwidth storage is provided with a plurality of advanced eXtensible interface memory map (AXI MM) interfaces. Both the computing assembly 5 and the host can be directly connected to the AXI MM interfaces to achieve data interaction with the high bandwidth storage. When starting to process a computing task, the host first stores the initial data to be computed corresponding to the current computing task in the high bandwidth storage, and notifies the computing assembly 5 to start the computing task. The computing assembly 5 retrieves the initial data to be computed from the high bandwidth storage for the first round of processing, and then writes the processed result data into the high bandwidth storage after the processing is completed. At the same time, the computing assembly 5 sends the forwarding instruction to the internal routing assembly 4. The frame disassembly unit 41 in the internal routing assembly 4 extracts the information of the frame header from the forwarding instruction and transmits the information to the instruction generation unit 42. The instruction generation unit 42 generates the first access instruction according to the information in the frame header and transmits the first access instruction to the interface conversion unit 43. The interface conversion unit 43 is connected to an AXI MM interface of the high bandwidth storage, and retrieves the corresponding result data from the high bandwidth storage according to the first access instruction. Considering that the data frame to be processed transmitted to the external routing assembly needs to satisfy advanced eXtensible interface stream (AXI Stream) interface protocol, after the interface conversion unit 43 needs to convert the result data that satisfies the AXI MM interface protocol into the result data that satisfies the AXI Stream interface protocol, the routing information and the result data that satisfies the AXI Stream interface protocol are encapsulated into the data to be processed through the framing unit 44. The data to be processed is transmitted to the third arbitration unit 451 in the internal routing module 45. After being processed by various units in the internal routing module 45, the data to be processed is transmitted to the external routing assembly 3.

After the acceleration device receives data sent by other acceleration devices to the acceleration device, the external routing assembly 3 transmits the data frame to be processed to the internal routing assembly 4. The third arbitration unit 451 in the internal routing module 45 outputs the data frame to be processed output by the external routing assembly 3 to the second parsing unit 452. The second parsing unit 452 extracts the routing information and data packets from the data frame to be processed. The second lookup unit 453 matches the routing information as the keyword in the preset routing table and determines the forwarding information based on the matching result. The second reassembly unit 455 retrieves the data packets from the second caching unit 454, and reassembles the forwarding information with the data packets to obtain the data frame to be forwarded. The fourth arbitration unit 456 forwards the data frame to be forwarded to the frame disassembly unit 41 through the corresponding port. The frame disassembly unit 41 extracts the frame header and data from the data frame, and transmits the frame header to the instruction generation unit 42. The instruction generation unit 42 generates the second access instruction according to the information in the frame header. The interface conversion unit 43 converts the data from AXI Stream interface protocol to AXI MM interface protocol according to the second access instruction and stores the data in the high bandwidth storage. The frame disassembly unit 41 records all received data frames, and after receiving all the data required for the next round of computing, sends a message to notify the computing assembly 5 that the next round of computing can be started. The computing assembly 5 retrieves the data required for the next round of computing from the high bandwidth storage and starts the next round of computing tasks. After performing a plurality of rounds of computing tasks required by the algorithm in the above manner, the computing assembly 5 stores the final computing result in high bandwidth storage and then sends an interrupt message to inform the host that the computing task is completed. The host retrieves the final computing result from the high bandwidth storage and completes the whole computing task.

In an exemplary embodiment, frame header information of the data frame to be output and the data frame to be processed both include a frame header identification field, a routing information field, an address information field, a data length field, a transaction type field, and a frame sequence number field.

The external routing assembly 3 is further configured to determine whether the data frame to be processed satisfies the outward forwarding condition based on routing information in the data frame to be processed, and determine whether the data frame to be processed satisfies the inward writing condition based on the routing information in the data frame to be processed.

The process of writing the data to be computed in the data frame to be processed into the storage assembly 1 includes:
writing the data to be computed in the data frame to be processed into the storage assembly 1 based on the frame header identification field, the address information field, the data length field, the transaction type field, and the frame sequence number field in the data frame to be processed.

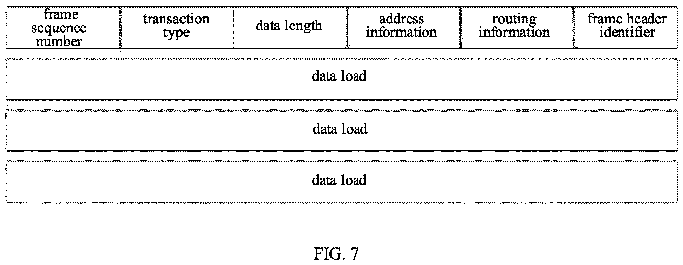

The data frame format is shown in FIG. 7, where the frame header consists of a frame header identifier, routing information, address information, a data length, a transaction type, and frame sequence number. The frame header identifier indicates that this is a new frame of data. The routing information is the number of the destination acceleration device, that is, which acceleration device this frame of data needs to be sent to. The address information provides a start address of the high bandwidth storage where this frame of data needs to be stored or read from. The data length gives the length of this frame of data. The transaction type indicates whether data is written to or read from high-bandwidth memory. The frame sequence number gives the sequence number of the data frame. The routing information is used by the external routing module 31 to forward the data frame to the corresponding acceleration device according to the routing information. Other information in the frame header is used by the internal routing assembly 4 to write to the high bandwidth storage or read data from the high bandwidth storage according to the information in the frame header.

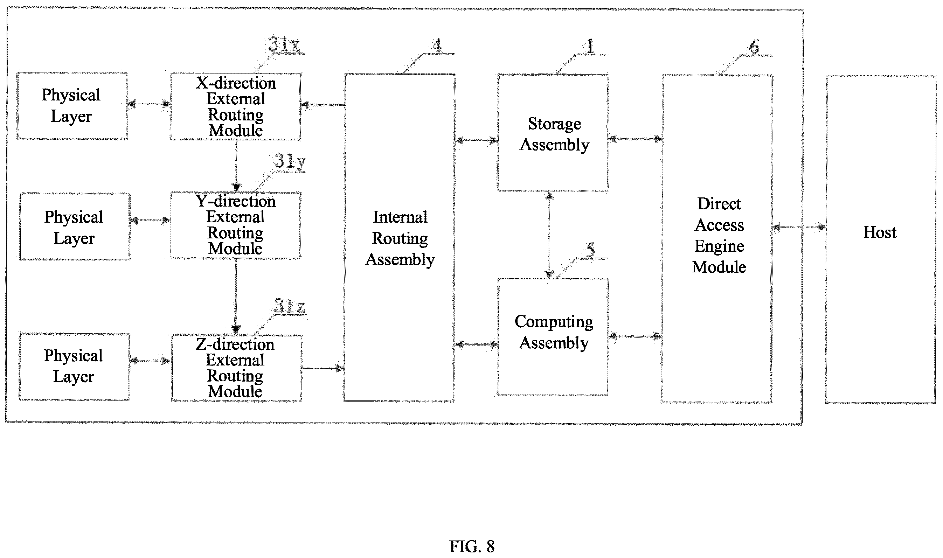

In an exemplary embodiment, referring to FIG. 8, the acceleration device further includes:
a direct access engine module 6, configured to output the second trigger instruction output by the host to the computing assembly 5, and write the data to be computed output by the host to the storage assembly 1.

In summary, the data transmission between acceleration devices in the present disclosure is realized through optical ports, and the physical layer protocol is implemented by Ethernet protocol or a point-to-point communication protocol such as Aurora. An acceleration device can be connected to a plurality of acceleration devices through a plurality of optical ports for data transmission. The data transmission bandwidth of a single optical port can reach 100Gb/s or more. The host transmits data to the high bandwidth storage of the acceleration card through the direct access engine module. The computing assembly 5 then retrieves data from the high bandwidth storage to complete the computing task issued by the host. The acceleration device has routing logic and can transmit data packets to designated acceleration devices through different optical ports based on the routing information carried by the data frame header. The data transmission architecture based on the acceleration device proposed in the present disclosure has good expansibility and can flexibly expand the number of acceleration cards according to requirements of actual application scenarios, meeting the requirements of different computing power scenarios.

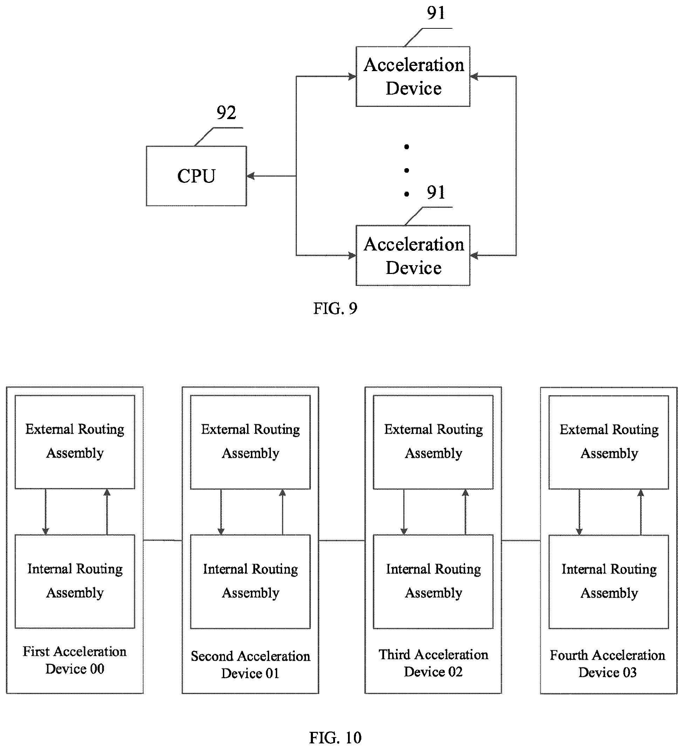

In a second aspect, referring to FIG. 9, the present disclosure also provides a heterogeneous computing architecture, including:
at least one acceleration device 91 as described in any one of the embodiments above; and
a central processing unit (CPU) 92 arranged at a host side, configured to send the second trigger instruction generated based on the computing task to the computing assembly of the at least one acceleration device 91, write initial data to be computed to the storage assembly in the at least one acceleration device 91, and obtain the result data corresponding to the computing task from the storage assembly.

In an exemplary embodiment, the acceleration device is any one of a field programmable gate array (FPGA) device, a graphics processor device, or an application specific integrated circuit device.

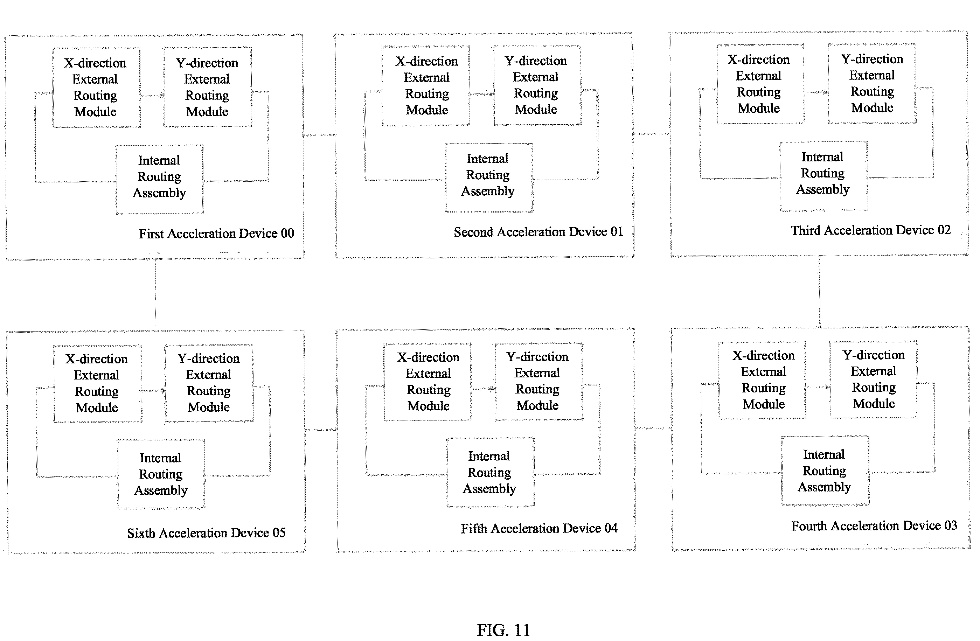

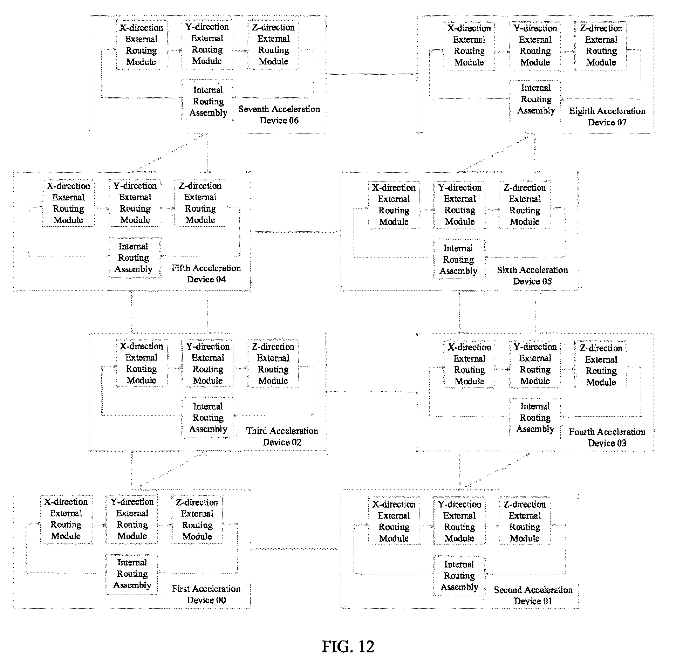

In the heterogeneous computing architecture, a server includes but is not limited to supporting eight PCIe devices. This embodiment takes a server equipped with eight FPGA acceleration devices as an example to provide a detailed explanation of the technical implementation of the present disclosure. The situation of more acceleration devices can be expanded in a similar way. The eight acceleration devices are connected to the CPU of the host though a PCIe bus, and each acceleration device is connected to other acceleration devices through the local optical ports. According to requirements of different application scenarios, the connection methods between acceleration devices can be diverse, for example, a one-dimensional architecture shown in FIG. 10, which is suitable for multi-core serial computing task scenarios. The external routing module is connected to an adjacent acceleration device through an optical port. The internal routing assembly transmits data to the computing assembly for processing or stores the data in high bandwidth storage according to the routing information. FIG. 10 only shows a connection diagram of a first acceleration device 00, a second acceleration device 01, a third acceleration device 02, and a fourth acceleration device 03. The connection methods of other numbers of acceleration devices are the same. After the computing assembly completes the processing task, the internal routing assembly retrieves the processed data from the high bandwidth storage and sends the processed data to other acceleration devices. The acceleration devices can also be connected as a two-dimensional architecture shown in FIG. 11, where each acceleration device has two external routing modules in X and Y directions, which are connected to the corresponding acceleration devices through optical ports to form a loop. This is suitable for scenarios of cyclic computing tasks. FIG. 11 only shows a connection diagram of a first acceleration device 00 to a sixth acceleration device 05, and the connection method of other numbers of acceleration devices is the same. In application scenarios where data interaction is more frequent, a three-dimensional architecture as shown in FIG. 12 can be built. There are three external routing modules in each acceleration device. The external routing modules in X, Y, and Z directions are connected to corresponding acceleration devices through optical ports. The data packets are forwarded from a corresponding optical port to the destination acceleration device according to the routing information carried by the data frame header. FIG. 12 only shows a connection diagram of a first acceleration device 00 to an eighth acceleration device 07, and the connection methods of other numbers of acceleration devices are the same.

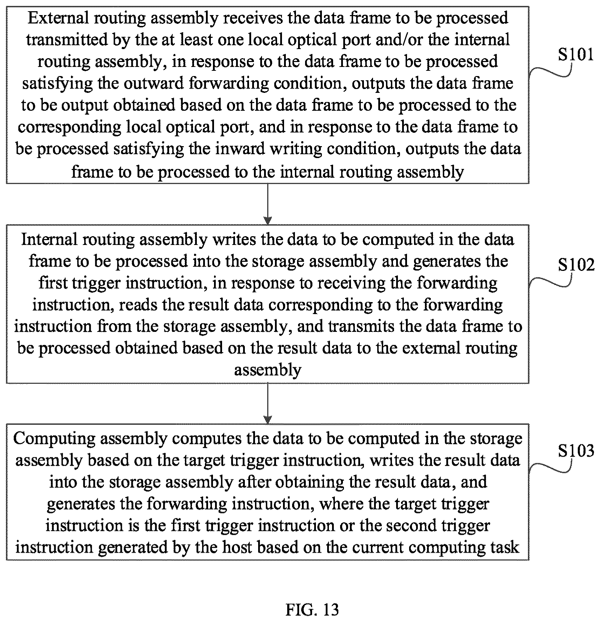

In a third aspect, please refer to FIG. 13, which is a flowchart of a data processing method provided in the present disclosure, applied to any acceleration device as described above. The data processing method includes:
S101, receiving, by the external routing assembly, the data frame to be processed transmitted by the at least one local optical port and/or the internal routing assembly, in response to the data frame to be processed satisfying the outward forwarding condition, outputting the data frame to be output obtained based on the data frame to be processed to the corresponding local optical port, and in response to the data frame to be processed satisfying the inward writing condition, outputting the data frame to be processed to the internal routing assembly;
writing, by the internal routing assembly, the data to be computed in the data frame to be processed into the storage assembly and generating the first trigger instruction, in response to receiving the forwarding instruction, reading the result data corresponding to the forwarding instruction from the storage assembly, and transmitting the data frame to be processed obtained based on the result data to the external routing assembly; and
computing, by the computing assembly, the data to be computed in the storage assembly based on the target trigger instruction, writing the result data into the storage assembly after obtaining the result data, and generating the forwarding instruction, where the target trigger instruction is the first trigger instruction or the second trigger instruction generated by the host based on the current computing task.

For the introduction of the data processing method provided in the present disclosure, please refer to the above embodiments, which will not be repeated herein.

The data processing method provided in the present disclosure has the same beneficial effects as the above data processing system.

It should also be noted that the use of relational terms such as first and second, and the like in the description are used solely to distinguish one entity or operation from another entity or operation without necessarily requiring or implying any actual such relationship or order between such entities or operations. Further, the terms "include", "comprise", or any other variation thereof, are intended to cover a non-exclusive inclusion, such that a process, method, article, or device that includes a list of elements does not include only those elements but may include other elements not expressly listed or inherent to such process, method, article, or device. An element limited by the statement "includes a..." does not, without more constraints, preclude the existence of additional identical elements in the process, method, article, or device that includes the element.

The previous description of the disclosed embodiments is provided to enable any person skilled in the art to implement or use the present disclosure. Various modifications to these embodiments will be readily apparent to a person skilled in the art, and the generic principles defined herein may be implemented in other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. An acceleration device, comprising:
a storage assembly;
at least one local optical port, wherein each of the at least one local optical port is connected to each remote optical port, and the remote optical port is an optical port on another acceleration device;
an external routing assembly connected to each local optical port, configured to receive a data frame to be processed transmitted by the at least one local optical port and/or an internal routing assembly, in response to the data frame to be processed satisfying an outward forwarding condition, output a data frame to be output obtained based on the data frame to be processed to a corresponding local optical port, and in response to the data frame to be processed satisfying an inward writing condition, output the data frame to be processed to the internal routing assembly;
the internal routing assembly, configured to write data to be computed in the data frame to be processed into the storage assembly and generate a first trigger instruction, in response to receiving a forwarding instruction, read result data corresponding to the forwarding instruction from the storage assembly, and transmit the data frame to be processed obtained based on the result data to the external routing assembly; and
a computing assembly, configured to compute the data to be computed in the storage assembly based on a target trigger instruction, write the result data into the storage assembly after obtaining the result data, and generate the forwarding instruction, wherein the target trigger instruction is the first trigger instruction or a second trigger instruction generated by a host based on a current computing task.

2. The acceleration device according to claim 1, wherein the at least one local optical port comprises a plurality of local optical ports, the external routing assembly comprises a plurality of external routing modules corresponding one-to-one to the plurality of local optical ports, and the plurality of external routing modules are connected in sequence;
wherein each of the plurality of external routing modules is configured to receive the data frame to be processed transmitted by a local optical port and/or an upper-level routing module connected to the external routing module itself, in response to the data frame to be processed satisfying the outward forwarding condition, output the data frame to be output obtained based on the data frame to be processed to the corresponding local optical port, in response to the data frame to be processed satisfying the inward writing condition, output the data frame to be processed to the internal routing assembly, and in response to the data frame to be processed satisfying an inward forwarding condition, output the data frame to be processed to a lower-level routing module; wherein in response to the upper-level routing module being the internal routing assembly, the lower-level routing module is another external routing module, and in response to the lower-level routing module being the internal routing assembly, the upper-level routing module is another external routing module.

3. The acceleration device according to claim 2, wherein each external routing module comprises a first receiving port, a second receiving port, a first forwarding port, and a second forwarding port, wherein the first forwarding port and the first receiving port are connected to the local optical port corresponding to the external routing module itself, the second forwarding port is connected to the second receiving port of the lower-level routing module, and the second receiving port is connected to the second forwarding port of the upper-level routing module;
wherein the external routing module is configured to receive the data frame to be processed through the first receiving port and/or the second receiving port, in response to the data frame to be processed satisfying the outward forwarding condition, output the data frame to be output obtained based on the data frame to be processed through the first forwarding port, in response to the data frame to be processed satisfying the inward writing condition, output the data frame to be processed to the internal routing assembly, and in response to the data frame to be processed satisfying the inward forwarding condition, output the data frame to be processed through the second forwarding port.

4. The acceleration device according to claim 2, wherein the external routing module is further configured to parse the data frame to be processed to obtain routing information, determine whether the data frame to be processed satisfies the outward forwarding condition based on the routing information, and/or determine whether the data frame to be processed satisfies the inward forwarding condition based on the routing information, and/or determine whether the data frame to be processed satisfies the inward writing condition based on the routing information.

5. The acceleration device according to claim 4, wherein a process of determining whether the data frame to be processed satisfies the outward forwarding condition based on the routing information comprises:
matching the routing information with rules in a preset routing table; and
determining that the data frame to be processed satisfies the outward forwarding condition in response to an existence of a matching effective rule;
wherein the preset routing table comprises corresponding relationships among forwarding actions, forwarding states, and numbers of a target acceleration device, each forwarding action, each forwarding state, and each number of the target acceleration device constitute a rule, and the effective rule is a rule in which the forwarding state is an effective state.

6. The acceleration device according to claim 4, wherein a process of determining whether the data frame to be processed satisfies the inward forwarding condition based on the routing information comprises:
matching the routing information with rules in a preset routing table; and
determining that the data frame to be processed satisfies the inward forwarding condition in response to an absence of a matching effective rule;
wherein the preset routing table comprises corresponding relationships among forwarding actions, forwarding states, and numbers of a target acceleration device, each forwarding action, each forwarding state, and each number of the target acceleration device constitute a rule, and the effective rule is a rule in which the forwarding state is an effective state.

7. The acceleration device according to claim 4, wherein a process of determining whether the data frame to be processed satisfies the inward writing condition based on the routing information comprises:
determining whether the routing information is local routing information;
in response to the routing information being the local routing information, determining whether the lower-level routing module connected to the external routing module itself is the internal routing assembly; and
in response to determining that the lower-level routing module connected to the external routing module itself is the internal routing assembly, determining that the data frame to be processed satisfies the inward writing condition;
a process of determining whether the data frame to be processed satisfies the inward forwarding condition based on the routing information comprises:
determining whether the routing information is the local routing information;
in response to the routing information being the local routing information, determining whether the lower-level routing module connected to the external routing module itself is the internal routing assembly; and
in response to that the lower-level routing module connected to the external routing module itself not being the internal routing assembly, determining that the data frame to be processed satisfies the inward forwarding condition.

8. The acceleration device according to any one of claims 2-7, wherein the external routing module comprises:
a plurality of external forwarding ports;
a first arbitration unit, configured to, in response to receiving the data frame to be processed output by the local optical port alone, output the data frame to be processed output by the local optical port to a first parsing unit, in response to receiving the data frame to be processed output by the upper-level routing module alone, outputs the data frame to be processed output by the upper-level routing module to the first parsing unit, and in response to receiving the data frame to be processed output by the local optical port and the data frame to be processed transmitted by the upper-level routing module simultaneously, arbitrate the two data frame to be processed, and output the data frame to be processed which is successfully arbitrated to the first parsing unit;
the first parsing unit, configured to extract routing information and data packets from the data frame to be processed;
a first table lookup unit, configured to match the routing information as a keyword in a preset routing table, and determine forwarding information based on a matching result;
a first caching unit, configured to cache the data packets;
a first reassembly unit, configured to retrieve the data packets from the first caching unit, reassemble the forwarding information and the data packets to obtain a data frame to be forwarded; and
a second arbitration unit, configured to output the data frame to be forwarded to an external forwarding port corresponding to the forwarding information for forwarding, wherein in response to the external forwarding port corresponding to the forwarding information is an external forwarding port connected to the local optical port, the data frame to be forwarded is the data frame to be output.

9. The acceleration device according to claim 8, wherein a process of determining the forwarding information based on the matching result comprises:
in response to the matching result indicating an existence of an effective rule corresponding to the routing information in the preset routing table, determining that the forwarding information is first forwarding information, wherein a forwarding port corresponding to the first forwarding information is a forwarding port connected to the local optical port; and
in response to the matching result indicating an absence of the effective rule corresponding to the routing information in the preset routing table, determining that the forwarding information is second forwarding information, wherein a forwarding port corresponding to the second forwarding information is a forwarding port connected to the lower-level routing module.

10. The acceleration device according to claim 1, wherein a process of writing the data to be computed in the data frame to be processed into the storage assembly and generating the first trigger instruction comprises:
writing the data to be computed in the data frame to be processed into the storage assembly;
determining whether all the data to be computed required for a next round of computing tasks has been written into the storage assembly;
in response to all the data to be computed required for the next round of computing tasks having been written into the storage assembly, generating the first trigger instruction; and
in response to not writing all the data to be computed required for the next round of computing tasks into the storage assembly, repeating the operation of writing the data to be computed in the data frame to be processed into the storage assembly until all the data to be computed required for the next round of computing tasks is written into the storage assembly.

11. The acceleration device according to claim 10, wherein the internal routing assembly is further configured to record an actual number of received data frames to be processed;
wherein a process of determining whether all the data to be computed required for the next round of computing tasks has been written into the storage assembly comprises:
determining whether the actual number reaches a preset number;
in response to the actual number reaching the preset number, determining all the data to be computed required for the next round of computing tasks has been written into the storage assembly; and
in response to the actual number not reaching the preset number, determining that all the data to be computed required for the next round of computing tasks has not been written into the storage assembly.

12. The acceleration device according to claim 11, wherein the computing assembly is further configured to generate an interrupt instruction in response to a preset number of rounds of computing tasks being completed, so that the host obtains result data of a last round of computing tasks from the storage assembly after receiving the interrupt instruction.

13. The acceleration device according to any one of claims 10-12, wherein the internal routing assembly comprises:
a frame disassembly unit, configured to, in response to receiving the forwarding instruction, obtain first frame header information in the forwarding instruction and output the first frame header information to an instruction generation unit, and in response to receiving the data frame to be processed transmitted by the external routing assembly, obtain second frame header information and the data to be computed in the data frame to be processed, and output the second frame header information to the instruction generation unit;
the instruction generation unit, configured to generate a first access instruction according to the first frame header information and a second access instruction according to the second frame header information;
an interface conversion unit, configured to, in response to receiving the first access instruction, read initial result data corresponding to the first access instruction from the storage assembly, and perform first protocol conversion on the initial result data, and in response to receiving the second access instruction, perform second protocol conversion on the data to be computed, and write the data to be computed after the second protocol conversion into the storage assembly according to the second access instruction; and
a framing unit, configured to encapsulate the result data after the first protocol conversion into the data frame to be processed and output the data frame to be processed to the external routing assembly.

14. The acceleration device according to claim 13, wherein the internal routing assembly further comprises an internal routing module, wherein the internal routing module comprises:
a plurality of internal forwarding ports, comprising a first internal forwarding port connected to the frame disassembly unit and a second internal forwarding port connected to the external routing assembly;
a third arbitration unit, configured to, in response to receiving the data frame to be processed output by the external routing assembly alone, output the data frame to be processed output by the external routing assembly to a second parsing unit, in response to receiving the data frame to be processed output by the framing unit alone, output the data frame to be processed output by the framing unit to the second parsing unit, and in response to receiving the data frame to be processed output by the external routing assembly and the data frame to be processed output by the framing unit simultaneously, arbitrate the two data frame to be processed, and output the data frame to be processed which is successfully arbitrated to the second parsing unit;
the second parsing unit, configured to extract routing information and data packets from the data frame to be processed;
a second table lookup unit, configured to match the routing information as a keyword in a preset routing table, and determine forwarding information based on a matching result;
a second caching unit, configured to cache the data packets;
a second reassembly unit, configured to retrieve the data packets from the second caching unit, reassemble the forwarding information and the data packets to obtain a data frame to be forwarded;
a fourth arbitration unit, configured to send the data frame to be forwarded to a forwarding port corresponding to the forwarding information for forwarding;
wherein the frame disassembly unit is configured to, in response to receiving the forwarding instruction, obtain the first frame header information in the forwarding instruction and output the first frame header information to the instruction generation unit, and in response to receiving the data frame to be forwarded, obtain the second frame header information and the data to be computed in the data frame to be forwarded, and output the second frame header information to the instruction generation unit.

15. The acceleration device according to claim 13, wherein the first protocol conversion is that an advanced eXtensible interface memory map (AXI MM) is converted into an AXI stream protocol, and the second protocol conversion is that the AXI stream protocol is converted into the AXI MM.

16. The acceleration device according to claim 13, wherein the frame disassembly unit is further configured to record an actual number of received data frames to be processed transmitted by the external routing assembly, in response to the actual number reaching a preset number, generate the first trigger instruction, and output the first trigger instruction to the computing assembly.

17. The acceleration device according to claim 1, wherein frame header information of the data frame to be output and the data frame to be processed both comprises a frame header identification field, a routing information field, an address information field, a data length field, a transaction type field, and a frame sequence number field;
the external routing assembly is further configured to determine whether the data frame to be processed satisfies the outward forwarding condition based on routing information in the data frame to be processed, and determine whether the data frame to be processed satisfies the inward writing condition based on the routing information in the data frame to be processed;
a process of writing the data to be computed in the data frame to be processed into the storage assembly comprises:
writing the data to be computed in the data frame to be processed into the storage assembly based on the frame header identification field, the address information field, the data length field, the transaction type field, and the frame sequence number field in the data frame to be processed.

18. The acceleration device according to claim 1, further comprising:
a direct access engine module, configured to output the second trigger instruction output by the host to the computing assembly, and write the data to be computed output by the host to the storage assembly.

19. A heterogeneous computing architecture, comprising:
at least one acceleration device according to any one of claims 1 to 18; and
a central processing unit (CPU) arranged at a host side, configured to send the second trigger instruction generated based on the computing task to the computing assembly of the at least one acceleration device, write initial data to be computed to the storage assembly in the at least one acceleration device, and obtain the result data corresponding to the computing task from the storage assembly.

20. A data processing method, applied to the acceleration device according to any one of claims 1 to 18, the data processing method comprising:
receiving, by the external routing assembly, the data frame to be processed transmitted by the at least one local optical port and/or the internal routing assembly, in response to the data frame to be processed satisfying the outward forwarding condition, outputting the data frame to be output obtained based on the data frame to be processed to the corresponding local optical port, and in response to the data frame to be processed satisfying the inward writing condition, outputting the data frame to be processed to the internal routing assembly;
writing, by the internal routing assembly, the data to be computed in the data frame to be processed into the storage assembly and generating the first trigger instruction, in response to receiving the forwarding instruction, reading the result data corresponding to the forwarding instruction from the storage assembly, and transmitting the data frame to be processed obtained based on the result data to the external routing assembly; and
computing, by the computing assembly, the data to be computed in the storage assembly based on the target trigger instruction, writing the result data into the storage assembly after obtaining the result data, and generating the forwarding instruction, wherein the target trigger instruction is the first trigger instruction or the second trigger instruction generated by the host based on the current computing task.
